# EUROPEAN PATENT APPLICATION

(11) **EP 2 113 296 A2**
(43) Date of publication of application: **04.11.2009**
(21) Application number: 09005441.2
(22) Date of filing: 16.04.2009
(51) Int. Cl.: B01D 53/94, B01D 53/90, F01N 3/20

(54) **Exhaust gas purification method using selective reduction catalyst**

(30) Priority: 28.04.2008 JP 2008117095
(71) Applicant: N.E. Chemcat Corporation, Tokyo 105-6124 (JP)
(72) Inventor: Ando, Ryuji, Numazu-shi Shizuoka 410 0314 (JP); Hihara, Takashi, Numazu-shi Shizuoka 410 0314 (JP); Kanno, Yasuharu, Numazu-shi Shizuoka 410 0314 (JP); Nagata, Makoto, Numazu-shi Shizuoka 410 0314 (JP)
(74) Representative: Müller-Boré & Partner Patentanwälte

(57) **Abstract**

An exhaust gas purification method for reducing selectively NOₓ in exhaust gas, which is exhausted from a lean burn engine, such as a boiler, a gas turbine or a lean-burn-type gasoline engine, a diesel engine, with a selective reduction catalyst and ammonia, **characterized in that**
an aqueous solution of urea is spray-supplied to the selective reduction catalyst, comprising at least the following zeolite (A) and the hydrolysis promotion component of urea (B), and it is contacted at 150 to 600ºC, and ammonia is generated in a ratio of [NH₃/NOₓ=0.5 to 1.5] to NOₓ in exhaust gas, as converted to ammonia, and a nitrogen oxide is decomposed into nitrogen and water;
·zeolite (A): zeolite comprising an iron element
·hydrolysis promotion component (B) : a complex oxide comprising at least one kind selected from titania or titanium, zirconium, tungsten, silicon or alumina.

## Description

The present invention relates to an exhaust gas purification method using a selective reduction catalyst, and more specifically the present invention relates to an exhaust gas purification method which is capable of purifying nitrogen oxide included in exhaust gas from a lean burn engine such as a boiler, a gas turbine or a lean-burn-type gasoline engine, a diesel engine, effectively, in particular, even at low temperature, by spray-supplying an aqueous solution of urea as the reducing component to the selective reduction catalyst.

In exhaust gas exhausted from a lean burn engine, various toxic substances derived from fuel or combustion air are included. As such toxic substances, a hydrocarbon (HC), a soluble organic fraction (hereafter may also be referred to as SOF), soot, carbon monoxide (CO), nitrogen oxide (NOₓ) and the like are included, and regulations on discharge amount of these toxic components have been strengthened year by year. As a purification method for these toxic components, a purification method by subjecting exhaust gas to contacting with a catalyst has been practically applied.

In addition, in such a lean burn engine, it is also investigated to suppress generation amount of the toxic substances by controlling kind, supply amount or supply timing of fuel, quantity of air or the like. However, a conventional catalyst or a control method was not able to attain satisfactory purification of exhaust gas. In particular, in a lean burn engine, nitrogen oxide tends to be exhausted easily, and also in a present state of ever strengthening regulations thereof, it was difficult to suppress discharge of the toxic substances by conventional NOₓ purification technology, in the case of a diesel engine mounted on an automobile, because operational condition always changes.

Among purification technology of NOₓ (hereafter may also be referred to as denitration "De-NOₓ"), as one using a catalyst, there has been known a technology for denitrating reductively by subjecting exhaust gas including NOₓ to contacting with the selective reduction catalyst having titanium oxide, vanadium oxide, zeolite and the like, as main components, in the presence of an ammonia (NH₃) component, as a selective reduction method or a selective catalytic reduction (hereafter may also be referred to as SCR).

In the SCR using this NH₃ component as a reducing agent, NOₓ is finally reduced to N₂ mainly by the following reaction formulae (1) to (3):

4NO + 4NH₃ + O₂ → 4N₂ + 6H₂O (1)

2NO₂ + 4NH₃ + O₂ → 3N₂ + 6H₂O (2)

NO + NO₂ + 2NH₃ → 2N₂ + 3H₂O (3)

In such a denitration catalyst system, NH₃ gas may be used as the reducing component, however, NH₃ itself has irritating odor or hazardous property. Therefore, there has been proposed a system for expressing denitration performance, by adding an aqueous solution of urea from the upstream of a denitration catalyst as an NH₃ component, to generate NH₃ by thermal decomposition or hydrolysis, so that it acts as a reducing agent.

Reaction formulae for obtaining NH₃ by such decomposition of urea are as follows:

NH₂-CO-NH₂ → NH₃ + HCNO (thermal decomposition of urea)

HCNO + H₂O → NH₃ + CO₂ (hydrolysis of isocyanic acid)

NH₂-CO-NH₂ + H₂O → 2NH₃ + CO₂ (hydrolysis of urea)

On denitration in exhaust gas, in the above denitration reactions (1) to (3), molar ratio of NH₃/NOₓ is enough to be 1.0 theoretically, however, in the case of transitional engine operation condition in operation of a diesel engine, or in the case where space velocity, temperature of exhaust gas and temperature at the catalyst surface are not suitable, there may be the case where ratio of NH₃/NOₓ of the NH₃ component to be supplied to obtain sufficient denitration performance, is inevitably increased, resulting in leakage of unreacted NH₃, which is pointed out to cause generation risk of secondary pollution such as new environmental contamination. Hereafter, the leaking NH₃ may be referred to as slip or NH₃ slip.

To such NH₃ slip, it was necessary to arrange an oxidation catalyst to purify slipped NH₃ by oxidation, at the later stage of the SCR catalyst. However, arrangement of such a catalyst for purifying the NH₃ slip leads to cost increase, and in particular, in an automobile, it was difficult to secure space for mounting the catalyst.

In addition, increased amount of the slipping NH₃ requires high oxidation capability for the catalyst, and it was necessary to use a high price noble metal such as platinum, which is activated species, in a large quantity.

In addition, in purification of NOₓ with the NH₃ component, as in the above equation (3), the reaction is promoted under atmosphere, where each of NO and NO₂ occupies nearly half (Non-Patent Literature 1). However, most of the NOₓ components exhausted from a lean burn engine are nitrogen monoxide (NO) (Patent Literature 2). Accordingly, there has been proposed to arrange an NO oxidation means at a flow passage of exhaust gas, to increase concentration of an NO₂ component in exhaust gas, so as to purify NOₓ efficiently (Patent Literature 2).

There have been proposed also methods for simultaneously purify toxic micro particle components and NOₓ in one catalyst system, by utilization of such a NOₓ oxidation means. One of them is to arrange the oxidation catalyst in a flow passage of exhaust gas, arrange a filter at the later stage thereof, spray an ammonia component at the later stage thereof, and arrange the SCR catalyst at the later stage thereof (Patent Literature 3).

In addition, in order to promote a reaction between NH₃ and NOₓ, there has been proposed also a method for promoting a reaction between NH₃ and NOₓ by enhancement of activity of the SCR catalyst, by generation of plasma at a denitration catalyst part (Patent Literature 1). Exhaust gas purification technology using such plasma is so to speak a physical process, and different in technological field from chemical purification technology of exhaust gas by a general catalyst technology. In addition, use of plasma could provide generating risk of new pollution, caused by catalyst components flying out into a vapor phase (into exhaust gas) and discharging into atmosphere, as well as could decrease catalytic activity, caused by subsequent deposition of catalyst components flown out, and growing of catalyst component particles and decreasing specific surface area value of the catalyst component particles.

Phenomenon induced by such plasma has been utilized effectively in other fields as PVD (Physical Vapor Deposition) or sputtering, however, its practical use has been difficult in a catalyst field for the exhaust gas purification.

In addition, utilization of plasma requires a plasma generation apparatus or a control apparatus thereof, which then requires investigation from cost and safety aspects. In particular, for an automobile, it is essential to be a compact sized one due to a problem of space for mounting the apparatus. Because of having such various problems, utilization of plasma in exhaust gas purification catalyst technology is not easy, and has not yet become popular.

As an NH₃ component used as a reducing agent, urea has been a main stream. This urea is spray-supplied as an aqueous solution of urea from the upstream of the SCR catalyst. As described above, because one contributing to reduction purification of NOₓ is mainly NH₃, a reaction of NOₓ in the SCR catalyst is influenced by decomposition efficiency of urea. Low decomposition efficiency of urea naturally decreases efficiency of NOₓ purification, and also increases use amount of urea, which could induce NH₃ slip caused by unreacted urea.

Under these circumstances, in order to efficiently utilize urea as the NH₃ component, it has been proposed a method for providing a decomposition means of urea to NH₃ by using a heating means or catalyst means, without supplying urea itself to the SCR catalyst, so as to supply NH₃ generated by decomposition to the SCR catalyst (Patent Literature 4, Patent Literature 5). However, this method leads to increase in cost due to increase in the number of parts by providing a decomposition section separately, and may cause clogging of the decomposition section by urea component. Patent Literature 4 has described an improvement means for clogging in a supply system of the reducing component, however, it has worry of cost increase or safety aspect due to complication of the apparatus or use of a heating means over 450°C. In addition, even by using such a means, it cannot prevent clogging in the supply system of the reducing component completely, and thus long period stable NOₓ purification in exhaust gas was not possible.

Under these states, automobile manufacturers have challenged to NOₓ purification technology using an aqueous solution of urea as the reducing component, and a FLENDS system of Nissan Diesel Motor Co., Ltd. or the like has been developed and has been prevailed. Accompanying with such development, the aqueous solution of urea with a concentration of 31.8 to 33.3% by weight was standardized and has been marketed as a trade name of "Adblue". It is predicted that NH₃-SCR technology using this standardized aqueous solution of urea will be spread also in the future, and effective NOₓ purification technology using the aqueous solution of urea has been required.
Patent Literature 1: JP-A-2002-538361 (Claim 7, Claim 27, 0008 and 0016)
Patent Literature 2: JP-A-5-38420 (Claim 1, 0012 and 0013)
Patent Literature 3: JP-A-2002-502927
Patent Literature 4: JP No. 3869314 (Claim 1, 0009 and 0013)
Patent Literature 5: JP-A-2002-1067 (Fig. 2)
Non-Patent Literature 1: Catalysis Today 114 (2006)3-12 (page 2, left column)

It is an object of the present invention to provide an exhaust gas purification method which is capable of purifying nitrogen oxide, included in exhaust gas from a lean burn engine such as a boiler, a gas turbine or a lean-burn-type gasoline engine, a diesel engine, effectively, in particular, even at low temperature, by spray-supplying the aqueous solution of urea as the reducing component to the selective reduction catalyst.

In addition, the present invention provides an exhaust gas purification method for purifying HC or CO, soot, SOF along with NOₓ, by a specific exhaust gas purification catalyst. It should be noted that in the present invention, "soot" and "SOF" hereafter may also be referred to collectively as combustible particle components.

The present inventors have intensively studied a way to solve the above-described conventional problems, and found that nitrogen oxide in exhaust gas can be purified in high efficiency, the specific zeolite and the SCR catalyst using hydrolysis component of urea, and by supplying the aqueous solution of urea having specific concentration, along with exhaust gas exhausted from a lean burn engine including nitrogen oxide, and generating the ammonia by SCR catalyst, when surface temperature thereof reaches equal to or higher than 150°C, and in this way NOₓ can be purified by using the aqueous solution of urea, which is standardized and easily available, by a simple configuration, without using plasma or without carrying out the hydrolysis of urea outside the catalyst system, and have completed the present invention.

That is, according to a first aspect of the present invention, there is provided an exhaust gas purification method for reducing selectively NOₓ in exhaust gas, which is exhausted from a lean burn engine, with a selective reduction catalyst and ammonia, **characterized in that** an aqueous solution of urea is spray-supplied to the selective reduction catalyst, comprising the following zeolite (A) and the hydrolysis promotion component of urea (B), as main components, and it is contacted at 150 to 600°C, and ammonia is generated in a ratio of [NH₃/NOₓ=0.5 to 1.5] to NOₓ in exhaust gas, as converted to ammonia, and a nitrogen oxide is decomposed into nitrogen and water.
·zeolite (A): zeolite comprising an iron element
·hydrolysis promotion component (B) : a complex oxide comprising at least one kind selected from titania or titanium, zirconium, tungsten, silicon or alumina

In addition, according to a second aspect of the present invention, there is provided the exhaust gas purification method, **characterized in that** the zeolite (A) is β-type zeolite having an iron element (A1), in the first aspect of the invention.

In addition, according to a third aspect of the present invention, there is provided the exhaust gas purification method, **characterized in that** the β-type zeolite (A1) comprises 0.1 to 5% by weight of an iron element, in the second aspect of the invention.

In addition, according to a fourth aspect of the present invention, there is provided the exhaust gas purification method, **characterized in that** the zeolite (A) is the β-type zeolite having an iron element and a cerium element (A2), in the first aspect of the invention.

In addition, according to a fifth aspect of the present invention, there is provided the exhaust gas purification method, **characterized in that** the β-type zeolite (A2) comprises 0.05 to 2.5% by weight of a cerium element, in the fourth aspect of the invention.

In addition, according to a sixth aspect of the present invention, there is provided the exhaust gas purification method, **characterized in that** the zeolite (A) is MFI-type zeolite (A3) having an iron element and/or a cerium element, in the first aspect of the invention.

In addition, according to a seventh aspect of the present invention, there is provided the exhaust gas purification method, **characterized in that** weight ratio [(B)/(A)] of the zeolite (A) and the hydrolysis promotion component (B) is 2/100 to 30/100, in the first aspect of the invention.

On the other hand, according to an eighth aspect of the present invention, there is provided the exhaust gas purification method, **characterized in that** a ceramic honeycomb-structured body, having a cell density of 100 to 1500 cell/inch, is covered with the zeolite (A) and the hydrolysis promotion component of urea (B), in an amount of 55 to 330 g/L per unit volume thereof, in the first aspect of the invention.

In addition, according to a ninth aspect of the present invention, there is provided the exhaust gas purification method, **characterized in that** the zeolite (A) and the hydrolysis promotion component of urea (B) are included in the upper layer of a catalyst component layer and/or the lower layer of the catalyst component layer of the ceramic honeycomb-structured body, in the eighth aspect of the invention.

Still more, according to a tenth aspect of the present invention, there is provided the exhaust gas purification method, **characterized in that** the upper layer of the catalyst component layer of the ceramic honeycomb-structured body includes the β-type zeolite including an iron element (A1), as well as the lower layer of the catalyst component layer includes the β-type zeolite including an iron element and a cerium element (A2), and at least either of the upper layer of the catalyst component layer or the lower layer of the catalyst component layer comprises the hydrolysis promotion component (B), in the ninth aspect of the invention.

Still more, according to an eleventh aspect of the present invention, there is provided the exhaust gas purification method, **characterized in that** the upper layer of the catalyst component layer of the ceramic honeycomb-structured body includes 25 to 150 g/L of the zeolite (A1), the lower layer of the catalyst component layer includes 25 to 150 g/L of the zeolite (A2), and the hydrolysis promotion component (B) included in one layer is 2.5 to 15 g/L, in the ninth or tenth aspect of the invention.

On the other hand, according to a twelfth aspect of the present invention, there is provided The exhaust gas purification method, **characterized in that** an oxidation unit, a spraying unit of an aqueous solution of urea and the selective reduction catalyst are arranged, in this order, at a flow passage of exhaust gas to be exhausted from a diesel engine, and the oxidation catalyst is used as said oxidation unit to increase nitrogen dioxide concentration, and the oxidation catalyst comprises the platinum component and/or the palladium component as the noble metal components, and a hydrocarbon component, carbon monoxide, nitrogen monoxide and nitrous oxide in exhaust gas are oxidized with the oxidation catalyst having these noble metal components in an amount of 0.1 to 3 g/L as converted to a metal and the platinum in an amount of 50 to 100% by weight as converted to a metal in the noble metal components, and then the aqueous solution of urea is spray-supplied to the selective reduction catalyst from the spraying unit of the aqueous solution of urea, to be contacted at 150 to 600°C, and nitrogen oxide is decomposed to nitrogen and water with ammonia generated, in the first aspect of the invention.

In addition, according to a thirteenth aspect of the present invention, there is provided The exhaust gas purification method, **characterized in that** the oxidation unit, the spraying unit of the aqueous solution of urea and the selective reduction catalyst are arranged, in this order, at a flow passage of exhaust gas to be exhausted from a diesel engine, and the oxidation catalyst and a filter are used as said oxidation unit, and the oxidation catalyst comprises the platinum component and/or the palladium component as the noble metal components, and the oxidation catalyst having these noble metal components in an amount of 0.1 to 3 g/L as converted to a metal and the platinum in an amount of 50 to 100% by weight as converted to a metal in the noble metal components, and combustible particle components are captured with said filter, in the twelfth aspect of the invention.

According to the exhaust gas purification method of the present invention (hereafter may be referred to as "the present method"), NOx can be purified by NH₃-SCR with a simple configuration without using special urea decomposition mechanism, or plasma assist. In particular, NOₓ in exhaust gas can be purified in high efficiency in a wide temperature range from low temperature to high temperature such as 150 to 600°C. In addition, it is possible to suppress discharge of such an NH₃ component that is not utilized in NOₓ purification, and is slipped from SCR. Therefore, it is effectively applicable, even in the case where installment space of a catalyst is limited, such as in an automobile.

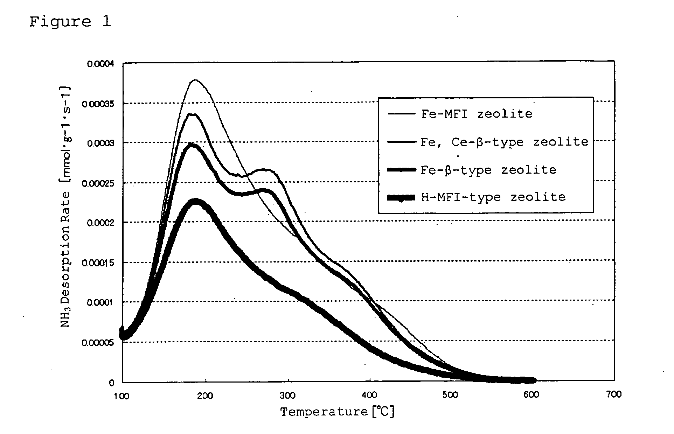

Figure 1 is a graph showing temperature dependency of NH₃ desorption rate, on β-type zeolite including an iron element and Fe-MFI-type zeolite, to be used in the present invention.

Explanation will be given below on the present method with reference to an example of a diesel engine to be used mainly in an automobile, however, the present method should not be limited to a diesel automobile application, but it can be used in purification technology of NOₓ generating by lean burn, even in other applications such as a mobile object application such as gasoline automobile, a ship or a fixed state application such as an electric generator.

### 1. The selective reduction catalyst to be used in the present method

The selective reduction catalyst to be used in the present method (hereafter may also be referred to as the present catalyst) is a composition including β-type zeolite including an iron element, and titania as the hydrolysis promotion component of a urea component, as essential components, and if necessary, an oxide including at least one of zirconium, tungsten and silicon.

### 1.1. Zeolite

Zeolite to be used in the present method is an SCR component, and is preferably β-type zeolite or MFI-type zeolite having a three-dimensional fine-pore structure. In particular, β-type zeolite has a relatively complicated three-dimensional fine-pore structure composed of linear fine-pores having relatively large diameter and orienting in one direction, and curved fine-pores crossing therewith, and has property such as easy diffusion of a cation in ion exchange, and easy diffusion of a gas molecule such as NH₃.

In addition, zeolite has an acid point where a basic compound such as NH₃ can adsorb, and the number of the acid point thereof differs corresponding to Si/Al ratio thereof. In general, zeolite with lower Si/Al ratio has more number of the acid point, however, has larger deterioration degree in durability in the co-presence of steam, and adversely, zeolite with higher Si/Al ratio is superior in heat resistance. In an NH₃ selective reduction catalyst in the present invention, because NH₃ adsorbs at the acid point of zeolite, and those points become activated points for reducing removal of nitrogen oxide such as NO₂, zeolite with higher acid point (one with lower Si/Al ratio) is advantageous in the denitration reaction. In this way, as for the Si/Al ratio, durability and activity are in trade-off relation, and in consideration on this point, the Si/Al ratio of zeolite is preferably 5 to 500, more preferably 10 to 100, and still more preferably 15 to 50. β-type zeolite and MFI-type zeolite similarly have such characteristics.

As the zeolite (A) of the present catalyst, zeolite including such an iron element is used as a main component. In addition, as such zeolite including the iron element, it is preferable to use zeolite, where the iron element is ion exchanged to a cation site of the zeolite. In addition, in the zeolite, where the iron element is ion exchanged, iron oxide may be included as the iron component. The zeolite (A) as the main component is zeolite including the iron element preferably in equal to or more than 80% by weight, and more preferably in equal to or more than 90% by weight, in total amount of zeolite to be used in the present catalyst. Because the zeolite not including the iron element has slow NH₃ adsorption and desorption rate, and also low activity as the SCR, increase in amount of such zeolite is not desirable.

In addition, in the case of using the present catalyst in a multi-layered state, it is preferable that the zeolite including the iron element to be included in one layer is equal to or more than 50% by weight, and it is preferable that the zeolite including the iron element is equal to or more than 80% by weight, and more preferably equal to or more than 90% by weight, in total zeolite amount to be used in the whole present catalyst. In the case of using it in a multi-layered state, even if zeolite not including the iron element is included in a large quantity in one layer, activity as the SCR as a whole catalyst is compensated, as long as the zeolite including the iron element to be included in one layer included in other layers is sufficient.

### 1.2. β-type zeolite

β-type zeolite, which is preferable as zeolite of the present catalyst, has, as described above, a three-dimensional fine-pore structure, and thus makes easy diffusion of a cation in ion exchange, and easy diffusion of a gas molecule such as NH₃. In addition, such a structure is a unique structure as compared with a structure of mordenite, faujasite or the like, which has only a linear void arranged in one direction, and because of having such a complicated void structure, β-type zeolite has high stability with little thermal structure destruction, and is an effective material for an automotive catalyst.

### 1.3. β-type zeolite added with the iron element (A1)

In zeolite, a cation, as a counter ion, is present as a solid acid point. As the cation, an ammonium ion or a proton is general, however, the iron element is added as the cation species into β-type zeolite to be used in the present catalyst, (hereafter may also be referred to "Fe-β"). Reason for enhancement of action of the present invention by β-type zeolite ion exchanged with the iron element is not clear, however, it is considered that NO is oxidized to NO₂ at the zeolite surface, by which reaction activity with NH₃ is increased and the skeleton structure of zeolite is stabilized, resulting in contribution to enhancement of heat resistance. The addition amount of the ion exchanged species to the zeolite is preferably 0.01 to 5% by weight, and more preferably 0.2 to 2.9% by weight, as iron (as converted to Fe₂O₃). The amount of the iron element over 5% by weight is not capable of securing number of activated solid acid point and thus not only decreases activity but also decreases heat resistance, while the amount below 0.01% by weight cannot provide sufficient NOₓ purification performance, and decreases exhaust gas purification performance, and thus not preferable. It should be noted that as the iron element to be added as the ion exchange species, all of them may be ion exchanged, however, a part thereof may be present as an iron oxide state.

As β-type zeolite to be used in the present catalyst, the composition of the unit cell is represented by the following average composition formula, and it is classified as synthetic zeolite with a tetragonal system:

M_{m/x}[AlₘSi₍₆₄₋ₘ₎O₁₂₈]·pH₂O

(wherein M represents cation species; x represents valancy of the above M; m is a number over 0 and below 64; and p is a number of equal to or larger than 0.)

Ratio of ion exchange by the iron element of β-type zeolite of the present catalyst is preferably represented by the following equation (4), based on formation of an ion pair by one iron element (ion) and the above two [AlO_{4/2}]⁻ units, which is a monovalent ion exchange site in the zeolite: [the number of moles of the iron element included by ion exchange in the zeolite of unit weight/{(the number of moles of Al₂O₃ present in the zeolite of unit weight)×(1/2)}] ×100 --- (4)

In this case, the ion exchange ratio is preferably 10 to 100%, more preferably 12 to 92%, and still more preferably 30 to 70%. The ion exchange ratio equal to or lower than 92% stabilizes much more the skeleton structure of the zeolite, and enhances heat resistance along with life time of the catalyst, resulting in providing more stabilized catalytic activity. However, too low ion exchange ratio, such as below 10%, may not provide sufficient denitration performance. It should be noted that the case of the ion exchange ratio of 100% means that all of the cation species in the zeolite are ion exchanged with the iron ion. In this way, the ion exchanged zeolite exerts excellent purification performance.

### 1.4. The β-type zeolite added with the iron element and the cerium element (A2)

As zeolite to be used in the present catalyst, it is preferable to use, other than Fe-β, β-type zeolite added with the cerium element together with the iron element (hereafter may be referred to also as "Fe, Ce-β"). Reason for enhancement of action of the present invention by the addition of the cerium element in this way is not clear, however, it is considered that because Ce has adsorption performance of an oxygen element, it also adsorbs the oxygen element in NOₓ even for NOₓ too, resulting in promotion of a reaction between the adsorbed NOₓ and NH₃, and thus suppress the HC poisoning of the catalyst, due to oxygen storage and discharge function of Ce. In addition, the addition of both of the iron element and the cerium element to β-type zeolite exerts both action by the above described iron element and action by the cerium element at the same time, which is considered to enhance action of the present catalyst.

In the present catalyst, not only "Fe-β" and "Fe, Ce-β" but also β-type zeolite added with the cerium element ("Ce-β") may be used. As described above, because Ce is expected to exert NOₓ purification action, NOₓ purification action is also exerted in the case of the addition to the present catalyst.

Amount of Ce ion and Fe ion of β-type zeolite in the "Fe, Ce-β", is preferably 0.1 to 5% by weight as iron (as converted to Fe₂O₃), and 0.05 to 2.5% by weight as cerium (as converted to CeO₂), and more preferably 0.5 to 2.5% by weight as iron, and 0.1 to 1.5% by weight as cerium. The amount of the iron element over 5% by weight is not capable of securing the number of activated solid acid point and thus not only decreases activity but also decreases heat resistance, and the amount below 0.1% by weight cannot provide sufficient NOₓ purification performance, and decreases exhaust gas purification performance, and thus it is not preferable. On the other hand, the amount of the cerium element over 2. 5% by weight is not capable of securing the number of activated solid acid point and thus not only decreases activity but also decreases heat resistance, and the amount below 0.05% by weight generates HC poisoning and could decrease catalytic activity. All of iron element and the cerium element may be ion exchanged, however, a part thereof may be present as an oxide state.

In the zeolite to be used in the present invention, preferably 20 to 80% by weight of "Fe-β" is included, and more preferably 30 to 70% by weight of "Fe-β" is included, based on total zeolite amount. In addition, in the case of using "Fe-β" and "Fe, Ce-β" in combination, each ratio of "Fe-β" and "Fe, Ce-β" is preferably 20 to 50% by weight, respectively, and more preferably 20 to 40% by weight relative to total zeolite amount.

In addition, the present catalyst may have a single-layered structure, however, a configuration of a two-layered structure is preferable. In the case of a configuration by a two-layered structure, each layer of the upper layer and the lower layer may include both of "Fe-β" and "Fe, Ce-β", however, it is preferable that "Fe-β" is used as a major zeolite component in the upper layer, and it is preferable that "Fe, Ce-β" is used in the lower layer. Reason for enhancement of purification performance of NOₓ in exhaust gas by using such a configuration is not clear, however, one factor is considered that Ce of "Fe, Ce-β" has storage capability of an oxygen atom. That is, action of Ce for adsorbing the oxygen atom in NOₓ makes NOₓ remained in the catalyst, and promotes a reaction with NH₃. However, the Ce component may sometimes promote oxidation of NH₃, which is a reducing agent, derived from oxygen storage performance thereof. Oxidation of NH₃ not only decreases SCR activity but also may generate new NOₓ by oxidation of NH₃. Therefore, presence of the Ce component at the upper layer results in oxidation of most of NH₃ introduced to the catalyst in the upper layer at the entrance, and may not provide NOₓ purification activity of the lower layer. Accordingly, in the present invention, it is preferable that "Fe, Ce-β" is used mainly at the lower layer.

On the other hand, "Fe-β" is not expected to exert high NOₓ adsorbing capability as in "Fe, Ce-β", and "Fe-β" has also lower NH₃ oxidation characteristics, as compared with "Fe, Ce-β". Therefore, oxidation of NH₃ is suppressed even under condition of high temperature and high reactivity. In addition, the upper layer has higher chance of contacting with components in exhaust gas, and thus is expected to exert higher reactivity, as compared with the lower layer. Accordingly, it is preferable that "Fe-β" is used in the upper layer.

In this way, to configure the upper layer and the lower layer may be said, in other words, to purify NOₓ by utilization of concentration gradient of reaction components in the catalyst. Because concentration of NH₃ is high at the surface side of the catalyst, and NOₓ tends to be adsorbed easily at the lower layer side of the catalyst, and is in a state of also high concentration thereof, and also NOx remained in the lower layer will be discharged finally passing through the surface layer, it is considered to be reduced and purified eventually with NH₃ accumulated at the surface layer.

It should be noted that both the upper layer and the lower layer may include both of "Fe-β" and "Fe, Ce-β". By taking such a configuration, effect of two kinds of β-type zeolite may be exerted in good balance in some cases, however, it is preferable that amount of the Ce component in the upper layer is less than amount of the Ce component in the lower layer.

As for the zeolite added with the iron element and the cerium element, which is used in the present catalyst, various grades can be purchased from major zeolite makers, and also they can be produced by procedures described in JP-A-2005-502451 etc..

That is, the iron element and the cerium element (hereafter may also be referred to as metal catalyst components) are enough to be supported inside the fine-pore or at the vicinity of the entrance of the fine-pore of the above β-type zeolite, and the supporting method may be any of an ion exchange method or an impregnation method. In the present invention, it is desirable that at least a part of the zeolite is promoted by ion exchange with the metal catalyst components. By suitable ion exchange, the skeleton structure of the zeolite is stabilized and heat resistance of the zeolite itself is enhanced. It should be noted that the metal catalyst components may not be ion exchanged completely, and a part thereof may be present as an oxide.

A method for obtaining ion exchanged zeolite is not especially limited, and by conventional method, zeolite may be subjected to ion exchange treatment by using an aqueous solution of the metal catalyst components (for example, ferric nitrate) , and firing after drying. The metal catalyst component compounds are usually used as a form of a nitrate salt, a sulfate salt, a carbonate salt, an acetate salt etc.. It should be noted that firing condition is not especially limited, as long as it is sufficient to obtain zeolite, where the metal catalyst components are stably supported. Firing temperature is preferably 300 to 1200°C, and more preferably 400 to 800°C. Heating may be carried out by a known heating means such as an electric furnace or a gas furnace or the like.

### 1.5. MFI-type zeolite

In the present catalyst, MFI-type zeolite may be used together with various β-type zeolites. The MFI-type zeolite is also known as an SCR component, and has a three-dimensional fine-pore structure similarly as in β-type zeolite. Here, Si/Al ratio of the MFI-type zeolite is also similar as in β-type zeolite. It is preferable that the MFI-type zeolite to be used in the present catalyst includes the iron element and/or the cerium element similarly as in β-type zeolite. Among these, the MFI-type zeolite including the iron element may also be referred to as "Fe-MFI" hereafter.

In comparing characteristics of such MFI-type zeolite with characteristics of β-type zeolite by means of NH₃-TPD, the Fe-MFI-type zeolite is superior in adsorption capacity, and β-type zeolite tends to have excellent capability in holding NH₃ up to higher temperature (refer to Fig. 1). Fig. 1 shows comparison data of performance of β-type zeolite including the iron element and the Fe-MFI-type zeolite to be used in the present catalyst. According to Fig. 1, it is understood that at lower temperature region, the Fe-MFI-type zeolite has faster NH₃ desorption rate, while at higher temperature region, the β-type zeolite has faster NH₃ desorption rate. This suggests that the Fe-MFI-type zeolite provides excellent reactivity between NH₃ and NOₓ at lower temperature region, while β-type zeolite provides excellent reactivity between NH₃ and NOₓ at higher temperature region. In Fig. 1, the case of H-MFI was also described. It is noted that the Fe-MFI has far faster NH₃ desorption rate, although the H-MFI has slow NH₃ desorption rate at lower temperature region.

In practical use environment of a diesel engine, by using the β-type zeolite and the MFI-type zeolite by mixing in the NH₃ selective reduction catalyst, it is possible to correspond, in a wide range, to transitional temperature variation in engine operation. In this case, weight configuration ratio represented by "β-type zeolite/ MFI-type zeolite", is preferably 0.1 to 10, and more preferably 0.2 to 5.

In addition, as for zeolite type, in addition to the above zeolite, one or more various types such as A, X, Y, MOR may also be used in combination.

In the case where the present catalyst is used in combination with other zeolite types, it is preferable that total ratio of the above various β-type zeolite types or the MFI-type zeolite is 50 to 100%.

In addition, zeolite may include, in addition to the above iron element and the cerium element, other transition metals, rare earth metals or noble metals etc.. Specifically, the transition metals such as nickel, cobalt, zirconium, copper, the rare earth metals such as lanthanum, praseodymium, neodymium, the noble metals such as gold, silver, platinum, palladium, rhodium, iridium, ruthenium, and the like are included.

In addition, a material generally usable as a catalyst material such as niobium, tungsten, tantalum, ceria, a cerium-zirconium complex oxide, lanthanum oxide, alumina, silica, zirconia, vanadia or, an alkali element such as tin, gallium, an alkaline earth element, or the like may be added as appropriate, within a range not to impair objects of the present invention.

### 2. The hydrolysis component of the urea component (B)

In the present catalyst, in addition to the above zeolite (A), the hydrolysis component of the urea component (hereafter may also be referred to as simply the hydrolysis component) is used. Such a hydrolysis component is one having titanium oxide as an essential component. In addition, in combination with titanium, if necessary, an oxide (titania, zirconia, tungsten oxide, silica, alumina, and a complex oxide thereof) including at least one of zirconium, tungsten, silicon, and aluminum may be used. In addition, the hydrolysis component may be used as a single oxide of each element, however, it may be used as a complex oxide or as a cluster with at least one kind of a particle selected from the above oxides, or other rare earth metal components, transition metal components etc. may be added.

Titanium oxide is widely known as an NH₃-SCR catalyst material for plant facility such as thermal power plant, together with vanadia and tungsten oxide. However, vanadia has worry of harmfulness to a human body and could evaporate into exhaust gas, therefore, use thereof tends to be avoided in development of recent exhaust gas purification technology, in particular, automotive exhaust gas purification technology used in environment near human dwelling environment.

In addition, the hydrolysis component to be used in the present catalyst is preferably a complex oxide of titanium oxide and silica or alumina. In particular, a complex oxide of titanium oxide and silica is preferable. Such a complex oxide is preferable in view of heat resistance.
Composition of the complex oxide of titanium oxide and silica or alumina is desirably titanium oxide/silica or alumina=98/2 to 50/50, and more desirably 95/5 to 80/20, in weight ratio. Too high amount of titanium oxide may deteriorate heat resistance, while too low amount of titanium oxide decreases decomposition performance of urea and may sometimes decrease catalyst activity at low temperature. In purification of exhaust gas, arrangement of DPF, to be described later, at the former stage of the present catalyst may sometimes raise exhaust gas temperature over 600°C by combustion of soot. Use of only titanium oxide may decrease activity in such a case.

Use of an oxide of tungsten or zirconium with titanium oxide, in addition to silica and alumina, provides expectation of action effect of large adsorption capability of urea or ammonia, which is an alkali component, because the oxide of tungsten or zirconium has strong acidity.

Weight ratio, [(B)/(A)], of the zeolite (A) and the hydrolysis promotion component (B) to be used in the present catalyst, is 2/100 to 30/100. It is desirable that the zeolite (A)/the hydrolysis promotion component (B) is 98/2 to 70/30, and more desirably 95/5 to 80/20. Too high amount of the zeolite (A) may sometimes provide inferior decomposition performance of urea, which is a reducing component, and too low amount of the zeolite (A) may sometimes provide inferior NOₓ purification performance.

In addition, in the case where the present catalyst has a laminated layer structure in the present invention, titania as the hydrolysis promotion component may be used in either one of the upper layer and the lower layer, or in both layers, however, usually it is preferable to be used in the upper layer. Urea supplied into exhaust gas diffuses from the surface of the SCR catalyst to the inside of the catalyst, however, when titania is included in the upper layer, urea is decomposed rapidly to NH₃, which is supplied as NH₃ having high reactivity with NOₓ throughout the SCR catalyst reaching to the lower layer, resulting in promotion of exhaust gas purification. However, in the case where the catalyst contacts with exhaust gas at high temperature such as over 300°C, it is preferable that titania is used in the lower layer.

In addition, such a hydrolysis promotion component may be included in high concentration at an exhaust gas flow side of the upper layer of the SCR catalyst, as well as it may be localized at the upstream side of exhaust gas flow.

### 3. The aqueous solution of urea

In the present method, the aqueous solution of urea is used as a reducing component. This aqueous solution of urea is distributed by the aqueous solution with a concentration of 31.8 to 33.3% by weight, as the automotive standard "JASO, E502:2004" issued by corporate aggregate, Society of Automotive Engineers of Japan. In the present invention, this aqueous solution of urea is supplied by a rate of 0.5 to 40 cc/minute to the present catalyst, and purifies NOₓ in exhaust gas.

A combustion engine, where the present invention is applied, includes from a diesel engine for a compact car with about 1-L displacement to a heavy duty one with over 50-L displacement, and NOₓ in exhaust gas exhausted from these diesel engines differs largely depending on an operation state or combustion control method thereof etc.. The SCR catalyst to be used to purify NOₓ in exhaust gas exhausted from these diesel engines may also be selected corresponding to versatility of the diesel engine displacement ranging from about 1 L to over 50 L.

### 4. Catalyst temperature

A diesel engine has relatively lower exhaust gas temperature, in view of structural characteristics thereof, as compared with a gasoline engine, and the temperature is generally 150 to 600°C. In particular, at the start or under low load, exhaust gas temperature is low. However, in the case where exhaust gas temperature is low, catalyst temperature also does not increase sufficiently, resulting in insufficient exertion of purification performance, and easy discharging of NOₓ in exhaust gas, which is not sufficiently purified.

In the present method, even at such low temperature, specifically even in the case where the surface temperature of the present catalyst is 150 to 180°C, excellent NOₓ purification performance is exerted, by using the aqueous solution of urea distributed on the market.

In addition, in the present method, purification of NOₓ in exhaust gas is possible in a simple catalyst layout practically to be used conventionally, without action of plasma, and without requiring, in advance, conversion of urea to NH₃ with high reactivity.

### 5. A honeycomb structure-type catalyst

The present catalyst is preferably used as the honeycomb-structure-type catalyst, by covering the surface of the honeycomb-structure-type carrier with a composition including the zeolite (A) and the hydrolysis promotion component (B).

Here, the honeycomb-structure-type carrier is not especially limited, and may be selected from known honeycomb-structure-type carriers. As such a honeycomb-structure-type carrier, there is a flow-through-type carrier, or a wall-flow-type carrier to be used in the CSF, and either type may be used in the present invention, however, the flow-through-type carrier is preferable.

In addition, such a honeycomb-structure-type body has arbitrary total shape, and may be selected, as appropriate, from a circular-cylinder-type, a tetragonal-cylinder-type, a hexagonal-cylinder-type etc., corresponding to a structure of an exhaustion system to be applied. Still more, also as for hole number of an opening part, suitable hole number may be determined, in consideration of kind of exhaust gas to be treated, gas flow rate, pressure loss or removal efficiency etc., however, usually it is preferably about 100 to 1500 pieces per 1 square inch, more preferably 100 to 900, in an exhaust gas purification application of a diesel automobile. The cell density per 1 square inch of equal to or higher than 10 pieces enables to secure contact area between exhaust gas and the catalyst, and provides sufficient exhaust gas purification function, and the cell density per 1 square inch of equal to or lower than 1500 pieces does not generate significant pressure loss of exhaust gas, and does not impair performance of an internal combustion engine.

In addition, cell wall thickness of such a honeycomb-structure-type carrier is preferably 2 to 12 mil (mil inch), and more preferably 4 to 8 mil. In addition, a material of the honeycomb-structure-type carrier includes a metal such as stainless steel, or ceramics such as cordierite, and any of them may be used.

It should be noted that as the one-piece-structure-type carrier to be used in the present catalyst, in addition to the honeycomb-structure-type carrier, also a sheet-like structured body knitted with fine fibrous substances, a felt-like non-inflammable structured body composed of relatively thick fibrous substances may be used. The one-piece-structure-type carrier could increase back pressure, however, because of having high supporting amount of the catalyst components, as well as large contact area with exhaust gas, there may be the case for increasing treatment capability, as compared with other structure-type carriers.

In the case where the present catalyst components are used for covering the above flow-through-type honeycomb carrier, covering amount thereof is preferably 55 to 330 g/L and more preferably 100 to 250 g/L, as total amount of the catalyst, for a carrier having a hole number of the opening part per 1 square inch of 100 to 1500 pieces, and a cell wall thickness of 4 to 8 mil.

In addition, amount of the zeolite (A) is preferably 50 to 300 g/L, and more preferably 90 to 225 g/L. Amount of the hydrolysis promotion component (B) is preferably 5 to 30 g/L, and more preferably 10 to 25 g/L. Too low use amount of the honeycomb-type SCR catalyst may sometimes provide insufficient effect of the present invention, while too high use amount generates clogging of the holes of the honeycomb, or increases back pressure of exhaust gas significantly, and could decrease engine performance.

It is preferable that the present catalyst components are laminated in two layers, that is, at the honeycomb-structured body side (the lower layer) and at the side thereon (the upper layer). In this case, it is preferable that the upper layer includes the "Fe-β", as an essential component, the lower layer includes the "Fe, Ce-β", as an essential component, and at least either of the upper layer of the catalyst component layer or the lower layer of the catalyst component layer includes the hydrolysis promotion component (B).

In an operation condition of an internal combustion engine under high rotation speed, exhaust gas becomes high temperature and high space velocity, and a reaction is promoted in the catalyst layer at the upper side. In addition, usually at high temperature, the denitration reaction tends to be promoted easily, even without support of the hydrolysis component.

A major catalyst component in the denitration reaction of the present invention is zeolite. In the case of intending to enhance denitration performance in high rotation speed, it is effective to increase concentration of zeolite in the catalyst layer of the upper layer. Accordingly, in the present invention, the catalyst can be designed so as not include the hydrolysis component in the catalyst layer of the upper layer. In this way, NOₓ in exhaust gas can be purified effectively, by using the whole catalyst, including the hydrolysis component, in the case of low rotation speed of an engine, while, by the catalyst layer of the upper layer having high zeolite concentration, in the case of high rotation speed.

Here, it is desirable that catalyst amount of the upper layer and catalyst amount of the lower layer are generally the same. It should be noted that it is preferable that the lower layer of the catalyst component layer of the ceramic honeycomb-structured body includes 25 to 150 g/L of the zeolite (A2), and 2.5 to 15 g/L of the hydrolysis promotion component (B), and the upper layer of the catalyst component layer includes 25 to 150 g/L of the zeolite (A1), and 2.5 to 15 g/L of the hydrolysis promotion component (B).

### 6. Production of the one-piece structure-type catalyst

The present catalyst is produced as the one-piece structure-type catalyst, by mixing the catalyst components and, if necessary, additives such as a binder or a surfactant as an aqueous medium, to prepare a slurry-state mixture, and then coating to the one-piece-structure-type carrier, followed by drying and firing.

That is, the slurry-state mixture is obtained by mixing the catalyst components and aqueous medium, in predetermined ratio. The aqueous medium may be used in the amount so as to uniformly disperse each of the catalyst components in the slurry. In this case, various additives may be added, if necessary. As such additives, in addition to the above surfactant to be used for adjusting the viscosity or for enhancing the slurry dispersion, an acid or an alkali for pH adjustment, a surfactant, a resin for dispersing etc. may be formulated. As for a mixing method for the slurry, crush-mixing with a ball mill etc. may be applicable, however, other crushing or mixing methods may also be applicable.

Then, the one-piece-structure-type carrier is coated with the slurry-state mixture. The coating method is not especially limited, however, a wash-coat method is preferable. By carrying out the drying and firing, after the coating, the one-piece-structure-type catalyst supporting the composition of the present catalyst is obtained. It should be noted that drying temperature is preferably 100 to 300°C, and more preferably 100 to 200°C. In addition, firing temperature is preferably 300 to 700°C, and particularly preferably 400 to 600°C. It is preferable that drying time is 0.5 to 2 hours, and firing time is 1 to 3 hours. Heating may be carried out by a known heating means such as an electric furnace or a gas furnace or the like.

In addition, in order to form multiple layers of the components of the present catalyst onto the one-piece-structure-type carrier, a plurality of the slurry-state mixtures may be prepared to repeat the above operation two times. In this case, drying and firing may be carried out after two times of the coatings by the wash-coat method, or drying may be carried out after the coating by the wash-coat method, and then after the covering of the second and the subsequent layers, drying and firing may be carried out.

### 7. Catalyst layout

The present method treats exhaust gas to be exhausted from a diesel engine, by using an apparatus where an oxidation unit, a spraying unit of an aqueous solution of urea and the selective reduction catalyst (SCR) are arranged, in this order, at a flow passage of exhaust gas to be exhausted from the diesel engine, or by using an apparatus where an oxidation catalyst, and a filter, as this oxidation unit, the spraying unit of the aqueous solution of urea and the selective reduction catalyst (SCR) are arranged, in this order.

As for purification of NOₓ in exhaust gas, it is desirable that exhaust gas is contacted with the SCR catalyst in a state that concentration of NO₂ in exhaust gas is increased. Because the NO₂ has superior reactivity with NH₃, by increasing concentration of NO₂ component in NOₓ, purification of NOₓ can be carried out efficiently. Accordingly, it is preferable that NO oxidation function is arranged at the former stage of the present catalyst, toward exhaust gas flow. As such an oxidation means, an oxidation catalyst to be arranged to oxidize HC and CO in exhaust gas (hereafter may also be referred to as DOC), or a filter for capturing combustible particle components to be included in exhaust gas (hereafter may also be referred to as DPF) is included.

As the oxidation catalyst, a catalyst having, as a main component, activated alumina supporting at least one kind of known platinum or palladium, may be used, and activated alumina including La is preferable. Still more, in addition to these components, a catalyst including β-type zeolite ion exchanged with cerium may be used. It is preferable that the present catalyst is arranged at the later stage of these DOC and DPF. It should be noted that the combustible particle components captured with the DPF are removed by subsequent combustion and thus DPF function is regenerated. For combustion of soot in the DPF, NO₂ is used. Combustion of soot by NO₂ is mild as compared with oxygen, and thus it little induces fracture of the DPF caused by combustion heat. As for the DPF, there is one covered with the oxidation catalyst with the object of promoting this combustion regeneration, and this may also be referred to as CSF. In the present method, the DPF is described as super-ordinate concept of the CSF, unless otherwise specified.

Here, when concentration of the NO₂ component in NOₓ (molar ratio of NO₂/NOₓ) is near 0.5, the highest purification characteristics is shown (Non-Patent Literature 1). In the present invention, the NO₂/NOₓ ratio of over 0.8 generates byproducts such as ammonium nitrate, in particular, at low temperature, and is thus not preferable. In addition, in the case where surface temperature of the present catalyst is as low as 150 to 300°C, the reaction proceeds in a good state, under the NO₂/NOₓ ratio of 0.4 to 0.75. And, because the reaction rate becomes fast at a high temperature of 300 to 600°C, the reaction proceeds in a good state, under the NO₂/NOₓ ratio of 0.25 to 0. 75. Because also the catalyst exerts high activity at a temperature of equal to or higher than 300°C, sufficient purification performance can be exerted, even when the NO₂/NOₓ ratio is not relatively high. Because reaction rate on the catalyst may sometimes not be fast at a relatively low temperature of equal to or lower than 300°C, it is preferable that exhaust gas is supplied to the present catalyst under the high NO₂/NOₓ ratio providing higher reactivity.

The DOC for adjusting the NO₂/NOₓ ratio in this way, preferably includes a platinum component or a palladium component, as noble metal components, and the noble metal components are included in an amount of 0.1 to 3 g/L as converted to a metal, and more preferably 0.5 to 3 g/L. Too high content of the noble metal components may excessively increase the NO₂/NOₓ ratio, while too low content may sometimes not provide the suitable NO₂/NOₓ ratio.

In addition, it is preferable that, in the noble metal components, platinum is included in an amount of 50 to 100% by weight, and more preferably 80 to 100% by weight, as converted to a metal. In quite a lot of cases, light oil to be used as fuel for a diesel automobile includes sulfur components, and a noble metal in the catalyst component may be poisoned by exhaust gas to be exhausted by using fuel including such sulfur components, however, palladium is known to be easily poisoned by sulfur, while platinum is known to be little poisoned by sulfur. Accordingly, it is preferable that platinum is used as a main component, as the noble metal component, in the DOC to be used in the present invention.

In addition, in a usual diesel automobile, the NO₂/NOₓ ratio in exhaust gas is usually large when exhaust gas temperature is low, and small at high temperature. As described above, in order to optimize the NO₂/NOₓ ratio in exhaust gas, it is preferable that a catalyst exerting oxidation function, such as the DOC or the DPF, is arranged at the former stage of the present catalyst. It is preferable that such a catalyst exerting oxidation function has function to increase value of the NO₂/NOₓ ratio by two times or more, when exhaust gas temperature is equal to or higher than 200°C, in particular at equal to or higher than 150°C.

It should be noted that in the case of not aiming at removing all of the major toxic components in exhaust gas, but aiming at only increasing concentration of NO₂ in NOₓ, such a layout may be taken that only the oxidation catalyst is arranged at the upstream of the present catalyst.

In the present method, the aqueous solution of urea is used as the reducing agent, and the aqueous solution of urea is decomposed with the present catalyst to generate NH₃, which is then utilized for NOₓ purification. It is desirable that ammonia is generated, in a ratio to NOₓ in exhaust gas of [NH₃/NOₓ=0.5 to 1.5], as converted to ammonia. However, depending on circumstances, there may be the case where all of NH₃ is not necessarily utilized in NOₓ purification. In this case, NH₃ not consumed in NOₓ purification is leaked (slipped) from the present catalyst, and discharged. Therefore, in order to purify this slipping NH₃, the oxidation catalyst may be arranged at the later stage of the present catalyst. Also in such a case, because of less amount of the slipping NH₃ as compared with a conventional urea SCR, a small NH₃ oxidation catalyst or an NH₃ oxidation catalyst with small amount of a noble metal may be used.

In addition, as a purification method of NOₓ in exhaust gas, there may be the case where a NOₓ storage catalyst is used separately from the SCR as in the present method, and it is called LNT (Lean NOₓ Trap). NOₓ stored in the LNT purifies NOx using HC or CO as a reducing agent, which is a reducing component in exhaust gas, and the present method may combine such an LNT.

### 8. Other catalyst layout

The present method may be used in combination with a catalyst exerting action different from the present catalyst, in the case of using in an automobile. Examples will be shown below on arrangement thereof, including those described above. It should be noted that in the following examples, the present catalyst is represented by "the present SCR", and one represented by "(Urea)" shows spray supply position of the aqueous solution of urea, as the reducing agent.
*DOC+(Urea)+the present SCR
*(Urea)+ the present SCR+DOC
*DOC+DPF+(Urea)+ the present SCR
*DOC+(Urea)+ the present SCR+DPF
*DOC+DPF+(Urea)+ the present SCR+DOC
*DOC+(Urea)+ the present SCR+DOC+DPF
*LNT+DOC+(Urea)+ the present SCR
*DOC+LNT+(Urea)+ the present SCR
*DOC+(Urea)+ the present SCR+LNT
*LNT+DOC+DPF+(Urea)+ the present SCR
*DOC+LNT+DPF+(Urea)+ the present SCR
*DOC+DPF+LNT+(Urea)+ the present SCR
*DOC+DPF+(Urea)+ the present SCR+LNT
*LNT+DOC+DPF+(Urea)+ the present SCR+DOC
*DOC+LNT+DPF+(Urea)+ the present SCR+DOC
*DOC+DPF+LNT+(Urea)+ the present SCR+DOC
*DOC+DPF+(Urea)+ the present SCR+LNT+DOC
*DOC+DPF+(Urea)+ the present SCR+DOC+LNT
*LNT+DOC+(Urea)+ the present SCR+DPF
*DOC+LNT+(Urea)+ the present SCR+DPF
*DOC+(Urea)+ the present SCR+LNT+DPF
*DOC+(Urea)+ the present SCR+DPF+LNT
*LNT+DOC+(Urea)+ the present SCR+DOC+DPF
*DOC+LNT+(Urea)+ the present SCR+DOC+DPF
*DOC+(Urea)+ the present SCR+LNT+DOC+DPF
*DOC+(Urea)+ the present SCR+DOC+LNT+DPF
*DOC+(Urea)+ the present SCR+DOC+DPF+LNT

In addition, such a catalyst may be combined, as appropriate, with a catalyst having a plurality of functions, in addition to one where one catalyst has one specific function. Specifically, as shown below, this is the case where the present catalyst is combined with the DPF, and either of the former stage and the later stage of the DPF, or either of the front side or the back side of the engine side of the DPF is covered with the present catalyst.
*DOC+(Urea)+DPF/ the present SCR

Explanation will be given below to still more clarify characteristics of the present invention, with reference to Examples and Comparative Examples, however, the present invention should not be limited to these Examples. It should be noted that the catalysts to be used in the present Examples along with Comparative Examples were prepared by the following methods.

### [Production of the present SCR catalyst (1)]

Slurry was obtained by the addition of a titanium-silicon complex oxide (silicon content as converted to SiO₂: 10% by weight, BET value: 100 m²/g), water, β-type zeolite ion exchanged with an iron element (concentration as converted to the iron element: 2% by weight, ion exchanged amount=70%, SAR=35), MFI-type zeolite ion exchanged with an iron element (concentration as converted to the iron element: 2% by weight, ion exchanged amount=70%, SAR=40), β-type zeolite ion exchanged with an iron element and a cerium element (concentration as converted to the iron element: 2% by weight, ion exchanged amount=70%, concentration as converted to the cerium element: 0.1% by weight, ion exchanged amount=5%, SAR=35), and silica as a binder, and then by adjustment of concentration with water, and milling by using a ball mill. A honeycomb-flow-through-type cordierite carrier (cell density: 300 cell/inch, wall thickness: 5 mil, length: 6 inch, diameter: 7. 5 inch) was covered with this slurry, by a wash-coat method, and after drying at 150°C for 1 hour, it was fired at 500°C for 2 hours under air atmosphere.

Amount of the catalyst per unit volume of the resulting present SCR catalyst (1), along with composition thereof are shown in Table 1. It should be noted that, in Table 1, "TiO₂" represents the titanium-silicon complex oxide, and the value represents supporting amount per unit volume [g/L] of the honeycomb-flow-through-type cordierite carrier.

### [Production of the present SCR catalyst (2)]

### =The lower layer=

Slurry was obtained by the addition of a titanium-silicon complex oxide (silicon content as converted to SiO₂: 10% by weight, BET value: 100 m²/g), β-type zeolite ion exchanged with an iron element and a cerium element (concentration as converted to the iron element: 2% by weight, ion exchanged amount=70%) (concentration as converted to the cerium element: 0.1% by weight, ion exchanged amount=5%) (SAR=35), β-type zeolite ion exchanged with an iron element (concentration as converted to the iron element: 2% by weight, ion exchanged amount=70%, SAR=35), and silica as a binder, and then by adjustment of concentration with water, and milling by using a ball mill. A honeycomb-flow-through-type cordierite carrier (cell density: 300 cell/inch, wall thickness: 5 mil, length: 6 inch, diameter: 7.5 inch) was covered with this slurry, by a wash-coat method. =The upper layer=

Subsequently, slurry was obtained by the addition of β-type zeolite ion exchanged with an iron element (concentration as converted to the iron element: 2% by weight, ion exchanged amount=70%) (SAR=35), silica as a binder, and water, and milling with a ball mill. A honeycomb-flow-through-type cordierite carrier coated at the lower layer part was covered with this slurry, by a wash-coat method, and after drying at 150°C for 1 hour, it was fired at 500°C for 2 hours under air atmosphere.

Amount of the catalyst per unit volume of the resulting present SCR catalyst (2), along with composition thereof are shown in Table 1, similarly as in the present SCR (1).

### [Production of the present SCR catalyst (3)]

### =The lower layer=

Slurry was obtained by milling β-type zeolite ion exchanged with an iron element (concentration as converted to the iron element: 2% by weight, ion exchanged amount=70%, SAR=35), water and silica as a binder, with a ball mill. A honeycomb-flow-through-type cordierite carrier (cell density: 300 cell/inch, wall thickness: 5 mil, length: 6 inch, diameter: 7.5 inch) was covered with this slurry, by a wash-coat method. =The upper layer=

Subsequently, slurry was obtained by the addition of a titanium-silicon complex oxide (silicon content as converted to SiO₂: 10% by weight, BET value: 100 m²/g), β-type zeolite ion exchanged with an iron element and a cerium element (concentration as converted to the iron element: 2% by weight, ion exchanged amount=70%) (concentration as converted to the cerium element: 0.1% by weight, ion exchanged amount=5%) (SAR=35), β-type zeolite ion exchanged with an iron element (concentration as converted to the iron element: 2% by weight, ion exchanged amount=70%) (SAR=35), silica as a binder, and water for concentration adjustment, and milling by using a ball mill. A honeycomb-flow-through-type cordierite carrier was covered with this slurry, by a wash-coat method, and after drying at 150°C for 1 hour, it was fired at 500°C for 2 hours under air atmosphere.

Amount of the catalyst per unit volume of the resulting present SCR catalyst (3), along with composition thereof are shown in Table 1, similarly as in the present SCR (1).

### [Production of the present SCR catalyst (4)]

### =The lower layer=

Slurry was obtained by the addition of a titanium-silicon complex oxide (silicon content as converted to SiO₂: 10% by weight, BET value: 100 m²/g), β-type zeolite ion exchanged with an iron element (concentration as converted to the iron element: 2% by weight, ion exchanged amount=70%) (SAR=35), β-type zeolite ion exchanged with an iron element and a cerium element (concentration as converted to the iron element: 2% by weight, ion exchanged amount=70%), (concentration as converted to the cerium element: 0.1% by weight, ion exchanged amount=5%) (SAR=35), silica as a binder, and water for concentration adjustment, and milling with a ball mill. A honeycomb-flow-through-type cordierite carrier (cell density: 300 cell/inch, wall thickness: 5 mil, length: 6 inch, diameter: 7.5 inch) was covered with this slurry, by a wash-coat method =The upper layer=

Subsequently, slurry was obtained by the addition of β-type zeolite ion exchanged with an iron element (concentration as converted to the iron element: 2% by weight, ion exchanged amount=70%) (SAR=35), MFI-type zeolite ion exchanged with an iron element (concentration as converted to the iron element: 2% by weight, ion exchanged amount=70%, SAR=40), silica as a binder, and water for concentration adjustment, and milling by using a ball mill. A honeycomb-flow-through-type cordierite carrier was covered with this slurry, by a wash-coat method, and after drying at 150°C for 1 hour, it was fired at 500°C for 2 hours under air atmosphere.

Amount of the catalyst per unit volume of the resulting present SCR catalyst (4), along with composition thereof are shown in Table 1, similarly as in the present SCR (1).

### [Production of Comparative SCR catalysts]

The comparative SCR catalysts (1) to (3) were obtained similarly except that the titanium-silicon complex oxide was omitted from the above present SCR catalysts (1) to (3), and silicon oxide was replenished instead. In addition, the Comparative SCR catalyst (4) was obtained by substituting MFI-type zeolite ion exchanged with an iron element of the present SCR catalysts (4), with proton-type MFI-type zeolite (SAR-40).

On each of the Comparative SCR catalysts obtained, amount of the catalyst per unit volume [g/L], along with composition thereof are shown in Table 1, similarly as in the present SCR catalyst(1) .

**Table 1**

| | LC | Fe-β | Fe-MF I | Fe,Ce-β | H-MF I | TiO₂ | SiO₂ | TSA |
|---|---|---|---|---|---|---|---|---|
| Example 1 SCR Cat.(1) | SL | 40 | 40 | 70 | | 10 | 30 | 190 |
| Example 2 SCR Cat. (2) | UL | 85 | | | | | 15 | 100 |
| | LL | 40 | | 35 | | 10 | 15 | 100 |
| Example 3 | UL | 40 | | 35 | | 10 | 15 | 100 |
| SCR Cat. (3) | LL | 85 | | | | | 15 | 100 |
| Example 4 SCR Cat.(4) | UL | 45 | 40 | | | | 15 | 100 |
| | LL | 40 | | 35 | | 10 | 15 | 100 |
| Com. Exl.1 Com.SCR Cat.(1) | SL | 40 | 40 | 70 | | | 40 | 190 |
| Com. Exl.2 Com.SCR Cat. (2) | UL | 85 | | | | | 15 | 100 |
| | LL | 40 | | 35 | | | 25 | 100 |
| Com. Exl.3 Com.SCR Cat. (3) | UL | 40 | | 35 | | | 25 | 100 |
| | LL | 85 | | | | | 15 | 100 |
| Com. Exl.4 Com.SCR Cat. (4) | UL | 45 | | | 40 | | 15 | 100 |
| | LL | 40 | | 35 | | 10 | 15 | 100 |

| | | | | | | | | |
|---|---|---|---|---|---|---|---|---|
| Com. Exl.: Comparative Example, Com.: Comparative, Cat.: Catalyst LC: Layer configuration, SL: Single layer, UL: Upper layer, LL: Lower layer, TSA: Total supporting amount | | | | | | | | |

### <DOC>

Alumina which supports Pt was obtained by impregnation of 500 g of commercially available lanthanide added γ-alumina (specific surface area: 220 m²/g, Al₂O₃/La₂O₃ (weight ratio)=98.4/1.6) with an aqueous solution of chloroplatinic acid so as to be 2% by weight as converted to platinium, and after drying at 100°C for 1 hour, it was subjected to firing in an electric furnace at 500°C for 1 hour under air atmosphere, and crushing after cooling.

Alumina which supports Pd was obtained by impregnation of 500 g of commercially available lanthanide added γ-alumina (specific surface area: 220 m²/g, Al₂O₃/La₂O₃ (weight ratio)=98.4/1.6) with an aqueous solution of palladium nitrate so as to be 1% by weight as converted to palladium, and after drying at 100°C for 1 hour, it was subjected to firing in the electric furnace at 500°C for 1 hour under air atmosphere, and crushing after cooling.

Into these two kinds of alumina samples, waster was added to prepare slurry by milling with alumina balls. A cordierite flow-through carrier (400 cell/inch², cell wall thickness:6/1000 [inch], diameter: 5.66 [inch], length: 6 [inch]) was impregnated with the slurry, and after blowing off unnecessary slurry portions, the carrier was dried at 100°C for 1 hour and then fired at 500°C to obtain a catalyst. The resulting catalyst was subjected to aging in the electric furnace at 800°C for 20 hours under air atmosphere. Catalyst composition in the resulting one-piece-structure-type catalyst is shown in Table 2.

**Table 2**

| | DOC [g/L] |
|---|---|
| Total covering amount of catalyst composition | 140 |
| Pd | 0.7 |
| Pt | 1.4 |

### (Examples 1 to 4) (Comparative Examples 1 to 4)

On each SCR obtained as above, by arranging an oxidation catalyst at the former stage of the present SCR catalysts, along with the Comparative SCR catalysts, "DOC+SCR" was formed, and NOₓ purification performance and concentration of slipping NH₃ were measured under the following measurement conditions, and the results are shown in Table 3. The NOₓ purification performance is defined by "[NOₓ concentration at the catalyst entrance - NOₓ concentration at the catalyst exit]/[NOₓ concentration at the catalyst entrance]", and is shown as "NOₓ conversion rate" in Table 3, and as for the concentration of slipping NH₃, "NH₃ concentration at the catalyst exit" is shown as "NH₃ slip concentration" in Table 3.

It should be noted that the DOC and the catalyzed DPF have oxidation function, and also have function to decrease NO ratio in NOₓ. In the present Examples, explanation will be given on a layout of "DOC+SCR", however, it is natural that "DOC+DPF+SCR" exerts similar action as in "DOC+ SCR", because also in "DOC+DPF+SCR", the oxidation reaction is carried out in the DPF.

### <Measurement conditions>

* Engine: a 5-L diesel engine
* Surface temperature of the present catalyst: 200°C (1200 rpm), 400°C (2000 rpm)
* Space velocity: 72,000/h (200°C), 120,000/h (400°C)
* Ammonia component: the aqueous solution of urea with a concentration of 32.5% by weight
* Spraying amount of the aqueous solution of urea: NH₃/NOₓ ratio in exhaust gas was controlled to 0.9
* Front of the DOC: NO₂/NOₓ ratio in exhaust gas: 0.3 (200°C), 0.1 (400°C)
* Rear of the DOC: NO₂/NOₓ ratio in front of the SCR: 0.7 (200°C), 0.3 (400°C)

**Table 3**

| | NOₓ Conversion rate [%] | | NH₃ Slip Concentration [ppm] | |
|---|---|---|---|---|
| | 200°C | 400°C | 200°C | 400°C |
| Example 1, SCR Cat. (1) | 62 | 58 | 2 | 39 |
| Example 2, SCR Cat. (2) | 65 | 67 | 0 | 46 |
| Example 3, SCR Cat. (3) | 59 | 60 | 0 | 51 |
| Example 4, SCR Cat. (4) | 66 | 61 | 0 | 55 |
| Com. Exl.1, Com. SCR Cat. (1) | 58 | 60 | 0 | 54 |
| Com. Exl.2, Com. SCR | 56 | 64 | 0 | 42 |
| Cat. (2) | | | | |
| Com. Exl.3, Com. SCR Cat. (3) | 60 | 57 | 0 | 50 |
| Com. Exl.4, Com. SCR Cat. (4) | 51 | 53 | 3 | 71 |

| | | | | |
|---|---|---|---|---|
| Cat.: Catalyst Com. Ex1.: Comparative Example | | | | |

### [Evaluation]

By comparing Examples using the above present SCR catalysts (1) to (4), with Comparative Examples using the Comparative SCR catalysts (1) to (4), the following is found.

That is, as shown in Table 3, the present SCR catalyst (1), which is the selective reduction catalyst relevant to the present invention, has superior NOₓ purification performance, as well as superior NH₃ slip suppression performance, as compared with the conventional type Comparative SCR (1). This is similar also in comparison between the present SCR catalyst (2) and the Comparative SCR (2), in comparison between the present SCR catalyst (3) and the Comparative SCR (3), and in comparison between the present SCR catalyst (4) and the Comparative SCR (4).

It should be noted that in the present SCR catalyst (2), because of higher content of Fe-β-type zeolite of the upper layer, performance superior to other catalysts is exerted. In addition, reason for extremely inferior result of the Comparative SCR (4) is considered that denitration function of H-MFI is far smaller as compared with Fe-zeolite, and ammonia consumption rate is slow, resulting in flowing out of ammonia without reaction with the catalyst.

## Claims

1. An exhaust gas purification method for reducing selectively NOₓ in exhaust gas, which is exhausted from a lean burn engine, with a selective reduction catalyst and ammonia, **characterized in that**
an aqueous solution of urea is spray-supplied to the selective reduction catalyst, comprising the following zeolite (A) and the hydrolysis promotion component of urea (B), as main components, and it is contacted at 150 to 600ºC, and ammonia is generated in a ratio of [NH₃/NOₓ=0.5 to 1.5] to NOₓ in exhaust gas, as converted to ammonia, and a nitrogen oxide is decomposed into nitrogen and water;
·zeolite (A): zeolite comprising an iron element ·hydrolysis promotion component (B) : a complex oxide comprising at least one kind selected from titania or titanium, zirconium, tungsten, silicon or alumina.

2. The exhaust gas purification method according to claim 1, **characterized in that** the zeolite (A) is β-type zeolite comprising an iron element (A1).

3. The exhaust gas purification method according to claim 2, **characterized in that** the β-type zeolite (A1) comprises 0.1 to 5% by weight of an iron element.

4. The exhaust gas purification method according to claim 1, **characterized in that** the zeolite (A) is the β-type zeolite comprising an iron element and a cerium element (A2).

5. The exhaust gas purification method according to claim 4, **characterized in that** the β-type zeolite (A2) comprises 0.05 to 2.5% by weight of a cerium element.

6. The exhaust gas purification method according to claim 1, **characterized in that** the zeolite (A) is MFI-type zeolite (A3) comprising an iron element and/or a cerium element.

7. The exhaust gas purification method according to claim 1, **characterized in that** weight ratio [(B)/(A)] of the zeolite (A) and the hydrolysis promotion component (B) is 2/100 to 30/100.

8. The exhaust gas purification method according to claim 1, **characterized in that** the zeolite (A) and a ceramic honeycomb-structured body having a cell density of 100 to 1500 cell/inch is covered with the hydrolysis promotion component of urea (B), in an amount of 55 to 330 g/L per unit volume thereof.

9. The exhaust gas purification method according to claim 8, **characterized in that** the zeolite (A) and the hydrolysis promotion component of urea (B) are comprised in the upper layer of a catalyst component layer and/or the lower layer of the catalyst component layer of the ceramic honeycomb-structured body.

10. The exhaust gas purification method according to claim 9, **characterized in that** the upper layer of the catalyst component layer of the ceramic honeycomb-structured body comprises the β-type zeolite including an iron element (A1), as well as the lower layer of the catalyst component layer comprises the β-type zeolite including an iron element and a cerium element (A2), and at least either of the upper layer of the catalyst component layer or the lower layer of the catalyst component layer comprises the hydrolysis promotion component (B).

11. The exhaust gas purification method according to claim 9 or 10, **characterized in that** the upper layer of the catalyst component layer of the ceramic honeycomb-structured body comprises 25 to 150 g/L of the zeolite (A1), the lower layer of the catalyst component layer comprises 25 to 150 g/L of the the zeolite (A2), and the hydrolysis promotion component (B) to be included in one layer is 2.5 to 15 g/L.

12. The exhaust gas purification method according to claim 1, **characterized in that** an oxidation unit, a spraying unit of the aqueous solution of urea and the selective reduction catalyst are arranged, in this order, at a flow passage of exhaust gas to be exhausted from a diesel engine, and an oxidation catalyst is used as said oxidation unit to increase nitrogen dioxide concentration, and the oxidation catalyst comprises the platinum component and/or the palladium component as the noble metal components, and a hydrocarbon component, carbon monoxide, nitrogen monoxide and nitrous oxide in exhaust gas are oxidized with the oxidation catalyst having these noble metal components in an amount of 0.1 to 3 g/L as converted to a metal and the platinum in an amount of 50 to 100% by weight as converted to a metal in the noble metal components, and then the aqueous solution of urea is spray-supplied to the selective reduction catalyst from the spraying unit of the aqueous solution of urea, to be contacted at 150 to 600ºC, and nitrogen oxide is decomposed to nitrogen and water with ammonia generated.

13. The exhaust gas purification method according to claim 12, **characterized in that** the oxidation unit, the spraying unit of the aqueous solution of urea and the selective reduction catalyst are arranged, in this order, at a flowpassage of exhaust gas to be exhausted from a diesel engine, and the oxidation catalyst and a filter are used as said oxidation unit, and the oxidation catalyst comprises the platinum component and/or the palladium component as the noble metal components, and the oxidation catalyst having these noble metal components in an amount of 0.1 to 3 g/L as converted to a metal and the platinum in an amount of 50 to 100% by weight as converted to a metal in the noble metal components, and combustible particle components are captured with said filter.
